# EUROPEAN PATENT APPLICATION

(11) **EP 3 434 391 A1**
(43) Date of publication of application: **30.01.2019**
(21) Application number: 17183879.0
(22) Date of filing: 28.07.2017
(51) Int. Cl.: B22F 3/10, B22F 3/11, H01L 49/02, H01M 4/90, H01G 9/048, H01G 11/26, H01G 4/005, H01M 4/66, H01M 4/80, H01G 11/28, H01G 11/66, H01G 11/70, H01G 11/84

(54) **A METHOD FOR PRODUCING A METALLIC STRUCTURE AND A METALLIC STRUCTURE OBTAINABLE BY THE METHOD**

(71) Applicant: RIJKSUNIVERSITEIT GRONINGEN, 9712 CP Groningen (NL)
(72) Inventor: Lu, Liqiang, 9747 AG Groningen (NL); Pei, Yutao, 9747 AG Groningen (NL)
(74) Representative: Nederlandsch Octrooibureau

(57) **Abstract**

A method for producing a porous metallic structure comprising a metal element from a metal salt comprising a cation part and an anion part, comprising the steps of: providing a volume of metal salt; exposing the volume of metal salt in an atmosphere comprising a reduction gas at a temperature below a melting temperature of the metal element, leading to converting the volume of metal salt into the porous metallic structure by removing the anion part using the reduction gas; wherein the porous metallic structure has a pore size between 1 nanometer and 50 micrometer, and a ligament size between 1 nanometer and 50 micrometer; wherein the ligament size is controlled by the temperature during the exposing.

## Description

### Field of the invention

The present invention relates to a method for producing a metallic structure, in particular a method for producing a porous metallic structure.

### Background art

A metal foam is a cellular structure consisting of a solid metal with pores comprising a large portion of the volume of the metal foam. The pores can be sealed (closed-cell foam) or interconnected (open-cell foam). If the pores have a pore size distribution from several nanometers to ten micrometers, the metal foam can be considered as a nanoporous or/and microporous metallic structure. These metallic structures can be applied in various fields such as energy storage and conversion, catalyst, templates and mechanical structures.

A current method for synthesizing porous metallic structures, in particular, nanoporous metallic structure is chemical etching or "dealloying" method. The starting materials used for "dealloying" are typically binary solid solutions (for instance, Ag-Au). The less noble constituent (e.g. Ag) is selectively dissolved during dealloying. The nobler constituent (e.g. Au) remains and simultaneously rearranges during dealloying on the crystal lattice to form a 3D bi-continuous microstructure with interpenetrating pore space and solid phase. By this method, various nanoporous metals can be made, such as Au, Ag, Cu, Ni, Al, Pt, etc.

However, chemical dealloying method requires specially prepared starting alloys, and takes very long time in the etching processes, and this method is better used for thin metal sheets as starting material because of their lower etching resistance than bulk metals. The etched away element should be less stable or noble, and after etching, the post-utilization of these sacrificed elements is a complicated process and costly. The etching often introduces impurities from etchants and oxides in the porous structure. Dealloying is not suitable for preparing multi-element nanoporous alloy that comprises both of less nobles and nobles.

Another method for producing porous metals is by sintering of nanoparticles or nanosized powder. Sintering is the process of aggregation and coalescence of metal nanoparticles. It requires metal nanoparticles as the precursors, and the preparation of these metal nanoparticles is a critical step and adds complexities and costs. Normally, the sintering process needs multiple steps that are complicated, and the additional cost of preparing nanoparticles leads to high total cost.

Sacrificial template assisted technique is also a method for producing porous metals. The templates can be porous polyurethane (PU) foam, silica (SiO₂ foam, colloidal silica or polystyrene, plastic particles, etc. Typically metals are first deposited inside the templates and following with removing the templates by burning out or etching. For the templating methods, the structure of metal foam is primarily determined by the templates. The pore size is normally not uniform and contains lots of macropores by using porous foam. Thus the selection of desired template is very crucial. The templating method involves the infiltration of metals inside the pores and removing the templates subsequently, thus complicates the processes and limits the synthesis of porous metals less noble than the templates.

There is therefore a need to provide a more efficient, facile, fast, purity controllable, and pore size controllable method to synthesize a porous metallic structure.

### Summary of the invention

According to a first aspect, the invention provides a method for producing a porous metallic structure comprising a metal element from a metal salt comprising a cation part and an anion part, the method comprising the steps of: providing a volume of metal salt; exposing the volume of metal salt in an atmosphere comprising a reduction gas at a temperature below a melting temperature of the metal element, leading to converting the volume of metal salt into the porous metallic structure by removing the anion part using the reduction gas. The porous metallic structure has a pore size between 1 nanometer and 50 micrometer, and a ligament size between 1 nanometer and 50 micrometer. The ligament size is controlled by the temperature during the exposing.

Advantageously, a more efficient, facile, fast, purity controllable, and pore size controllable method to synthesize a porous metallic structure is provided. This method can generate volatile gases, or water. These gaseous byproducts could help to generate more pores. The porous metallic structure in the present invention can be hierarchically porous structures (namely with pores of different sizes), and nanoporous structure dominant. The pore size can be from nanometers to micrometers and with a good uniformity. The ligament size can be easily controlled by the temperature.

In an embodiment, said converting the volume of metal salt into the porous metallic structure comprises at least one of the following: thermal decomposition of the metal salt, thermally reducing the metal salt, and annealing the metal salt at the temperature below a melting temperature of the metal element. In this way, the metal salt can be converted into a porous metallic structure.

In another embodiment, the converting the volume of metal salt into the porous metallic structure comprises cluster nucleation and grain growth. Metallic atoms can nucleate to form metallic aggregates, and further grow into metallic crystallites, which form the porous metallic structure.

In another embodiment, the method further comprises a pretreatment of the metal salt before the exposing, wherein the pretreatment comprises preheating or/and mechanical pressing or/and mechanical pressing or/and adding a buffer additive, such as NaCl, SiO₂, or polyethylene glycol to the metal salt before the preheating.

Advantageously, the shaping of the porous metallic structure can be achieved by pretreatment such as mechanical pressing, film deposition, instead of using post-processing reported in prior art.

In another embodiment, the metal salt exposed in the atmosphere is without pretreatment. In this way, the process is simplified.

In another embodiment, the porous metallic structure comprises bicontinuous nanopores or/and micropores.

In yet another embodiment, the method comprises synthesizing a coating covering the porous metallic structure. In this way the porous metallic structure can be used in a battery or a capacitor.

In yet another embodiment, the coating is synthesized by chemical synthesis or/and electrodeposition or/and chemical vapor deposition or/and diffusion or/and ultra-sonication. Conventionally, for thick bulk materials, the uniform infiltration of exotic materials inside the porous structure is difficult because of the low ionic diffusion rate and worse adherence of the coating. This embodiment advantageously provides a uniform coating inside the porous structure.

In yet another embodiment, a shape of the porous metallic structure comprises at least one of: powder, sheet, wire, membrane, bulk.

According to another aspect, the invention provides a porous metallic structure obtainable by the abovementioned method.

According to yet another aspect, the invention provides an electrode comprising a current collector, wherein the current collector comprises the porous metallic structure.

According to yet another aspect, the invention provides a battery comprising a current collector, wherein the current collector comprises the porous metallic structure. Preferably, the battery can be a lithium-ion battery, lithium-air battery, lithium-sulfur battery, alumina-ion battery, zinc-oxygen battery, Ni-Zn battery or a sodium-ion battery.

In yet another embodiment, the battery is filled with a chemically active material comprising at least one of silicon, sulfur, germanium, antimony, indium, tin, tin oxides, lithium iron phosphate, Li₄Ti₅O₁₂, MnO₂, Mn₃O₄, MnO, Fe₂O₃, Fe₃O₄, FeF₃, CuO, Cu₂O, TiO₂, V₂O₅, CoO, Co₃O₄, NiCo₂O₄, RuO₂, NiOOH, Ni(OH)₂, Co(OH)₂, MoS₂, SnS₂, VS₂, V₅S₈, SnSe₂, NiS, Ni₂S₃, CoS₂, TiS₂, FeS, oxalates such as NiC₂O₄, MnC₂O₄, CoC₂O₄, FeC₂O₄, CuC₂O₄, and LiFePO₄, LiMn₂O₄, phosphorus.

According to yet another aspect, the invention provides a capacitor plate comprising the porous metallic structure.

Further embodiments are disclosed in the attached claims.

### Short description of drawings

Embodiments of the present disclosure will be described hereinafter, by way of example only, with reference to the accompanying drawings which are schematic in nature and therefore not necessarily drawn to scale. Furthermore, like reference signs in the drawings relate to like elements.
Fig. 1 schematically shows a flowchart of producing a porous metallic structure according to an embodiment of the present disclosure.
Fig. 2 schematically shows a procedure of producing a porous metallic structure according to an embodiment of the present disclosure.
Fig. 3a-g show porous metallic structures, XRD and adsorption/desorption isotherm results of the porous metallic structure according to an embodiment of the present invention.
Figs. 4a-d show SEM pictures of a porous metallic structure according to an embodiment of the present invention.
Fig. 5 shows a SEM picture of a porous metallic structure according to an embodiment of the present invention.
Figs. 6a-b show SEM pictures of a porous metallic structure according to an embodiment of the present invention.
Fig. 7 shows a SEM picture of a porous metallic structure according to an embodiment of the present invention.
Fig. 8 shows a SEM picture of a porous metallic structure according to an embodiment of the present invention.
Fig. 9 shows mean grain size of a porous metallic structure as a function of exposing time.
Fig. 10 shows mean grain/ligament/pore size of a porous metallic structure as a function of temperature.
Fig. 11a-f show a porous metallic structure according to an embodiment of the present invention.

### Description of embodiments

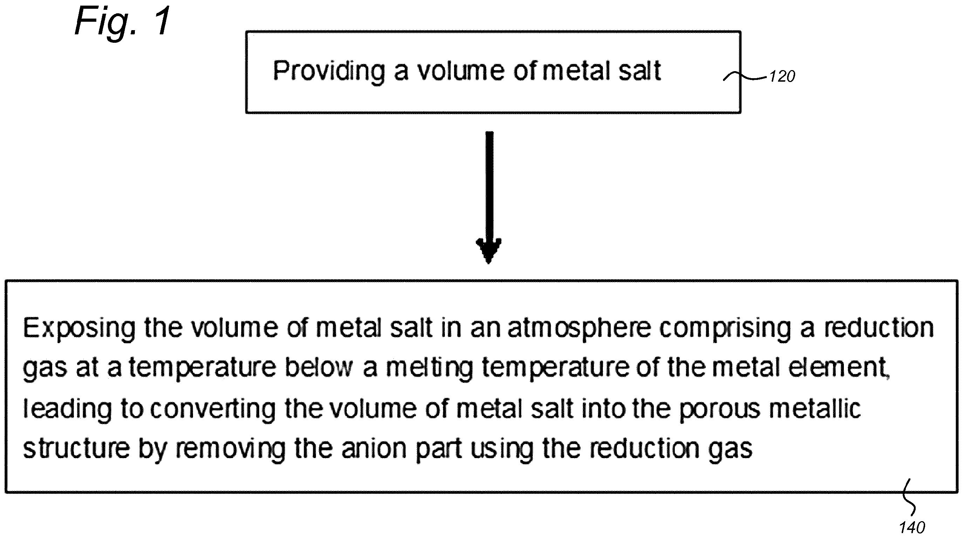

Fig. 1 schematically shows a flowchart of producing a porous metallic structure according to an embodiment of the present disclosure. The porous metallic structure comprises a metal element and is produced from a metal salt comprising a cation part and an anion part. In step 120 a volume of the metal salt is provided. In step 140 the volume of the metal salt is exposed in an atmosphere comprising a reduction gas at a temperature below a melting temperature of the metal element, leading to converting the volume of metal salt into the porous metallic structure by removing the anion part using the reduction gas. The porous metallic structure has a pore size between 1 nanometer and 50 micrometers, and a ligament size between 1 nanometer and 50 micrometer. The ligament size is controlled by the temperature during the exposing.

Advantageously, a more efficient, facile, fast, and pore size controllable method to synthesize a porous metallic structure is provided. This method can generate volatile gases, or water. These gaseous byproducts could help to generate more pores. The porous metallic structure in the present invention can be hierarchically porous structures, and nanoporous structure dominant. The pore size can be from nanometers to micrometers and with a good uniformity.

Advantageously, according to the present invention, nanoporous metals can be directly synthesized by thermal reduction and annealing of metallic precursors, such as metal salts or their liquid solution, hydroxides, in one step. The as-synthesized nanoporous metals have three dimensional bicontinuous nano-/micro-porous structures. The pore size and ligaments size can be well controlled from tens nanometers to several microns. The as-synthesized nanoporous metals can be controlled in large bulk size, sheet or powder. The as-synthesized porous metals can be single metals, binary alloys, ternary alloys, even multi-element (≥ 4 types of elements) alloys. The present invention is well controllable, facile and versatile. The raw material needed is only a metallic salt or its liquid solution, such as metal nitrates, chlorides, sulfates, oxalates, acetates, hydroxides, and their corresponding hydrates and liquid solutions, etc. It suits industrial scale production because of short period, simplified process, low cost and abundant raw materials.

The porous metallic structure can be advantageously free of impurities such as chloride. Optionally, the structure can contain carbon, nitrogen derived from buffer additives. Optionally, buffer additives can be added before the exposing, such as NaCl, KCl, CaCl₂, Ca(OH)₂, citrate acid, trisodium citrate, SiO₂ nanomaterials and other organic molecular or polymers such as polyethylene glycol.

In an embodiment, the converting the volume of metal salt into the porous metallic structure comprises at least one of the following thermal decomposition of the metal salt, thermal reducing the metal salt, and annealing the metal salt at the temperature below a melting temperature of the metal element. Optionally, the converting can be the abovementioned three steps subsequently.

In an embodiment, the converting the volume of metal salt into the porous metallic structure is by removing the anion part via thermal decomposition and the reduction gas.

The temperature whereat the metal salt is exposed or/and the anion part is removed or/and the porous metallic structure is formed, can be considered an exposing temperature, and this temperature can be between 100 °C and 3000 °C, more particularly, between 200 °C and 1000 °C. The exposing temperature can comprise a reduction temperature and an annealing temperature. They can be different. For example, the reduction occurs at 300 °C, but the annealing at 600 °C.

The exposing can comprise an exposing time or an exposing duration at the temperature between 1 second and 1 week, more particularly, between 10 seconds and 24 hours. Within the exposing duration, there is a temperature increase rate between 0.1 °C/min and 500 °C/min, more particularly, between 1 °C/min and 20 °C/min. The temperature can for example increase from room temperature to an elevated temperature. After the temperature reaches a maximum, there is also a temperature decrease rate between 0.1 °C/min and 1000 °C/min, and a cooling time between 1 second and 5 weeks.

In an embodiment, the reduction gas can comprise hydrogen, more particularly H₂/Ar (0.001-100 vol.% H₂) or H₂/N₂ (0.001-100 vol.% H₂). The exposing can comprise a pressure in the atmosphere between 10⁻⁶ mbar and 2 bar. Optionally, the exposing comprises a mechanical pressing of the metal salt with a pressure of the mechanical pressing between 0 and 10000 bar, more particularly, between 0 and 2000 bar.

In an embodiment, the method can further comprise a pretreatment of the metal salt before the exposing, wherein the pretreatment comprises preheating or/and mechanical pressing. The preheating can be at a temperature between 0 °C and 800 °C, more particularly, between 100 °C and 200 °C. The preheating can comprise a temperature increase rate or/and a temperature decrease rate between 0.1 °C/min and 100 °C/min. The preheating can comprise a duration between 1 second and 5 weeks. The pretreatment can be in a pretreatment atmosphere comprising at least one of air, water vapor, N₂, Ar, H₂/Ar (0-100 vol.% H₂), and H₂/N₂ (0-100 vol.% H₂). The pretreatment atmosphere can comprise a pressure between 10⁻⁶ mbar and 10000 bar. Optionally the mechanical pressing of the pretreatment can comprise a pressure between 0 and 1000 MPa. Alternatively, the metal salt can be exposed without pretreatment in the atmosphere comprising the reduction gas at the temperature below the melting temperature of the metal element.

Advantageously, the shaping of the porous metallic structure can be achieved by pretreatment such as mechanical pressing, film deposition, instead of using post-processing reported in prior art. The pore size distribution can be controlled by parameters such as pretreatment of the metal salt, thermal reduction condition, annealing temperature and time, reduction gas content, temperature increase rate, temperature decrease rate, or pressure during the disposing.

In an embodiment, the porous metallic structure comprises bicontinuous nanopores or/and micropores. The porous metallic structure can have a surface area is between 0.1 m²/g and 1000 m²/g, more particularly, between 0.1 m²/g and 200 m²/g. Optionally, the ligament size increases when the temperature during the exposing increases. The ligament size can also be controlled by an exposing duration. The ligament size increases when the exposing duration increases. This indicates a grain growth during reduction or/and annealing. The ligament size can also be controlled by the reduction gas, such as a concentration of the reduction gas or/and a flow rate of the reduction gas. The pore size can be controlled by the temperature during the exposing or/and the exposing duration or/and the reduction gas (concentration or/and flow rate). For example, the pore size increases with increasing the temperature during the exposing, or/and the pore size increases with increasing the exposing duration.

Advantageously, the porosity, surface area and cumulative volume of open pores can be very high and controllable, the apparent density can be lower.

In an embodiment of the invention, the thermal reduction process is a process of removing the anion part of the metal salt. The new metallic atoms rearrange, (cluster) nucleate and grow metallic grains. The new grains form ligaments and porous structure. During heating, the anions of these salts can be subsequently removed by the decomposition and hydrogen reduction. The left metal atoms rearrange, nucleate, grow to new grains which become the unit of building ligaments and 3D porous architectures. Comparing with the extraction of non-metal atoms, the volume of materials could shrink and form big pores of tens or hundreds of microns.

The present invention has many advantages: firstly the wide precursors choices; It does not need the crucial binary alloy in dealloying. Secondly because of the controllable porosity, which are the pore sizes and ligaments sizes. Thirdly the processes can be very fast, within minutes to hours, which saved lots of time. Fourthly, it does not require the etching and templates, economically. It also does not need nanoparticles as precursor. Also, this method does not only apply to single element metal, also is suitable for multi-element systems, such as Ni-Co, Ni--Cu, Ni-Pt, Pt-Co, even Ni-Co-Pt, Pt-Co-Pb.

In an embodiment of the invention, the cation part comprises at least one of: Li, Al, Mg, Zr, Nb, Mo, Tc, Rh, Pt, Ir, Os, Re, La, Hf, W, Ni, Cu, Fe, Co, Pt, Au, Ag, Ti, Zn, Ta, Mn, Cr, Sn, V, Cd, Ru, Pd, or Ni-Cu, Ni-Cr, Ni-Co, Co-Fe, Fe-Co-Ni alloy.

In an embodiment of the invention, a volume of metal salt is exposed for producing the porous metallic structure.

In another embodiment of the invention, the metal salt as defined hereinbefore is not a metal oxide.

In an embodiment of the invention, the metal salt as defined hereinbefore is not a metal hydroxide.

In an embodiment of the invention, the one or more metal salts as defined hereinbefore are not chosen from the group consisting of metal hydroxide and metal oxides.

In a preferred embodiment of the invention, the one or more metal salts as defined hereinbefore are chosen from the group comprising metal chlorides, metal oxalates, metal acetates, metal nitrates, metal nitrites, metal sulfates, metal sulfites, metal carbonates, organometallic salts, metal phosphates, the hydrates of these materials (i.e. metal chloride hydrates, metal oxalate hydrates, metal acetate hydrates, metal nitrate hydrates, metal nitrite hydrates, metal sulfate hydrates, metal sulfite hydrates, metal carbonate hydrates, organometallic salt hydrates, metal phosphate hydrates), metal hydroxides such as Ni(OH)₂. The one or more metal salts can also be chosen from the group comprising a liquid solution with 0.1 - 100 wt. % of metal chlorides, metal oxalates, metal acetates, metal nitrates, metal nitrites, metal sulfates, metal sulfites, metal carbonates, organometallic salts, metal phosphates, the hydrates of these materials (i.e. metal chloride hydrates, metal oxalate hydrates, metal acetate hydrates, metal nitrate hydrates, metal nitrite hydrates, metal sulfate hydrates, metal sulfite hydrates, metal carbonate hydrates, organometallic salt hydrates, metal phosphate hydrates), or/and metal hydroxides.

In another embodiment of the invention, the porous metallic structure comprises at least one of powder, sheet, wire, membrane, bulk. The product in the present invention can be powder (1-1000 microns), bulk (1 mm-10 m) or sheets, which can be determined by the pretreatment and the other parameters. Conventionally, the product either are powders, and using post- processing to other shapes, which is more cumbersome, or bulk but requires a long processing (such as during etching) time for producing.

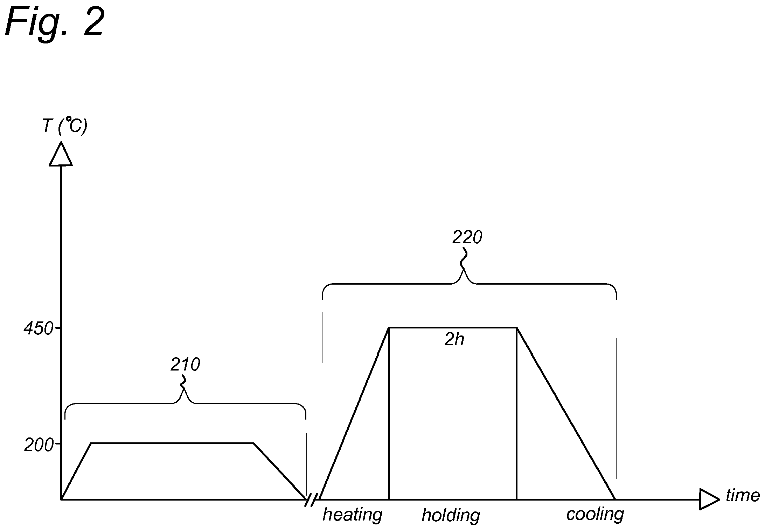

Fig. 2 schematically shows a procedure of producing a porous metallic structure according to an embodiment of the present disclosure. Fig. 2 schematically shows a procedure including pretreatment 210 comprising preheating, and after the pretreatment thermal reduction and annealing 220. Fig. 2 shows possible parameters for preparing nanoporous Ni structures. Typically, the preheating is performed under < 600 °C and in air. During the preheating, the temperature increases with a temperature increase rate from for example a room temperature to 200°C as shown in Fig. 2. Then the temperature decreases with a temperature decrease rate to for example the room temperature. The duration of the preheating 210 can be defined as the duration between the starting of the temperature increase and the ending of the temperature decrease. Fig. 2 shows a flat temperature profile at 200°C after the temperature increase. Alternatively that profile can also be a polynomial profile. The converting the volume of metals salt into the porous metallic structure is performed after the preheating, at a temperature increase rate 1 to 10 °C/min and an elevated temperature of 250-800 °C for 1 min to 10 h. After this elevated temperature or annealing temperature, the temperature decreases with a temperature decrease rate of 1 - 100 °C/min. The duration of the converting or the exposing duration 220 can be defined as the duration between the starting of the temperature increase and the ending of the temperature decrease. Fig. 2 shows a flat temperature profile at 450°C after the temperature increase. Alternatively that profile can also be a polynomial profile. The typical reducing gas used is H₂ (5-20 vol.%)/Ar. The pretreatment is selectable, which means the precursors can be processed by one step of reduction and annealing process without preheating, prepressing, and the other processing beforehand.

In an embodiment, a porous Ni structure can be obtained by putting 0.1 mol of nickel nitrate hexahydrate as precursors in a crucible boat, preheat it in air at 100-600 °C until it become solid, and then transfer it to a furnace, heat to 250-800 °C in a heating rate 1-5 °C/min. During heating, introduce 100 sccm H₂/Ar (5-15 vol% H₂) gases. Hold the sample for 2 h in the furnace. After naturally cooling down, collet the samples of nanoporous Ni. For other nickel salts precursors, the procedures are the same with using nickel nitrate hexahydrate, only except changing the precursors.

In an embodiment, a porous Cu structure can be obtained in a similar way as for the porous Ni structure, except using a precursor copper(II) nitrate trihydrate.

In an embodiment, a porous Ni-Cu alloy structure can be obtained in a similar way as for the porous Ni structure, except mixing 0.1 mol of copper (II) nitrate trihydrate and 0.2 mol nickel (II) nitrate hexahydrate together as the precursors.

In an embodiment, a porous Ni-Co alloy structure can be obtained in a similar way as for the porous Ni structure, except mixing 0.2 mol cobalt nitrate hexahydrate and 0.1 mol nickel (II) nitrate hexahydrate together as the precursors.

In an embodiment, a porous Ni-Co-Ag alloy structure can be obtained in a similar way as for the porous Ni structure, except mixing 0.3 mol cobalt nitrate hexahydrate, 0.3 mol nickel (II) nitrate hexahydrate and 0.1 mol silver nitrate together as the precursors.

In an embodiment, a porous Ni-Co-Cu-Ag alloy structure can be obtained in a similar way as for the porous Ni structure, except mixing 0.047 mol cobalt nitrate hexahydrate and 0.038 mol nickel (II) nitrate hexahydrate, 0.007 mol copper (II) nitrate trihydrate and 0.008 mol of silver nitrate together as the precursors.

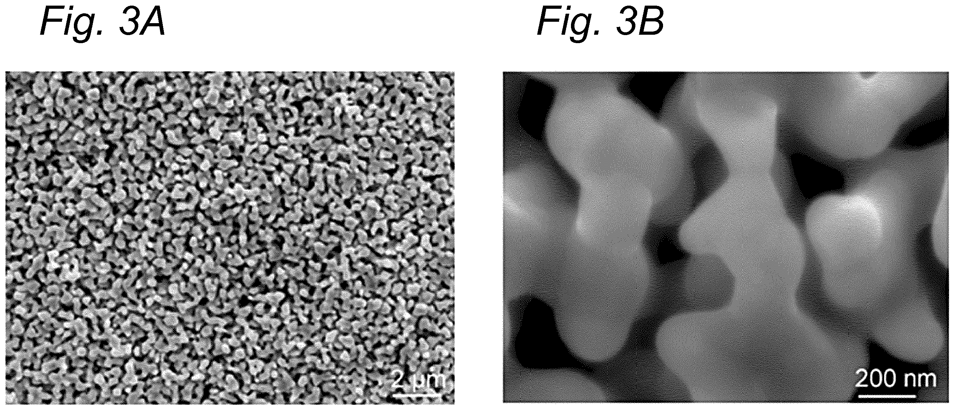

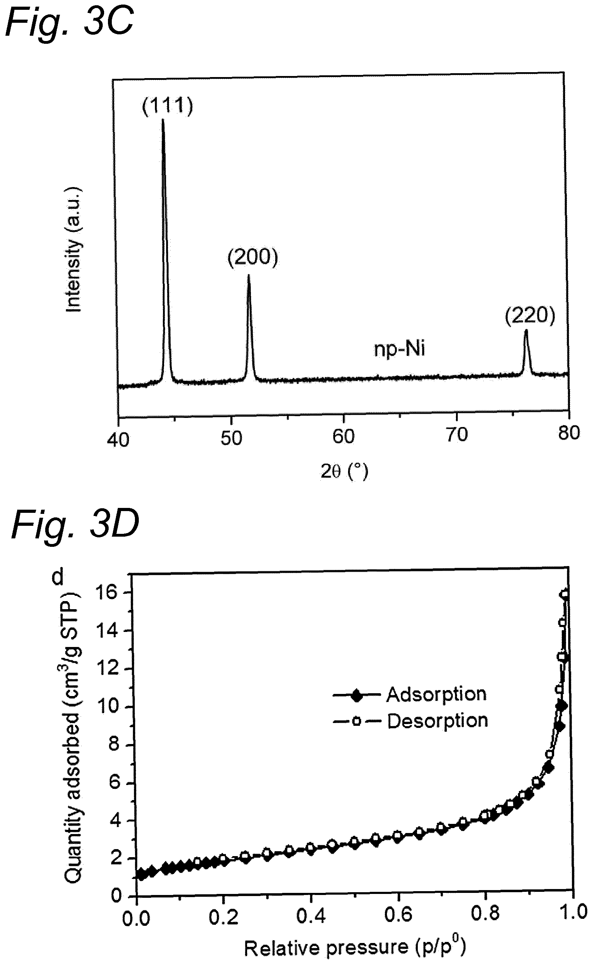

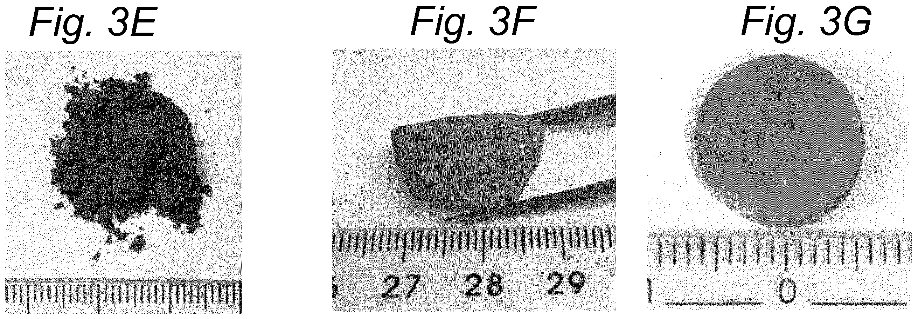

Fig. 3 shows the microstructure of as-prepared nanoporous Ni by thermal decomposition and reduction of nickel nitrate hexahydrates at 300 °C for 2 h. From the low magnification in Fig. 3a it can be seen the nanoporous structure is relatively uniform. Fig. 3b shows the biocontinuous nanoporous configuration, showing the interpenetrating pores and ligaments. The size of pores is in the range of 24-600 nm with an average of -200 nm. The ligament size is also -100-200 nm. The dimension of the joints is 600-800 nm, larger than the pore size and ligament size. From Fig. 3b, it can be also found the nickel grain boundaries in the ligament and joints, indicating that the nanoporous structure could be built up by Ni particles. Fig. 3c shows the XRD patterns of nanoporous Ni, indicating the main growth orientation of {111}. Based on Williamson-Hall equation, the average grain size is calculated about 50 nm. Fig. 3d shows the N₂ adsorption/desorption isotherm of the hierarchical nanoporous Ni. The specific surface area was measured about 6.58 m²/g by Brunauer-Emmett-Teller (BET) method. It should be noticed that, some pre-treatment such as pre-heating, pre-mechanical pressing, pre-dissolving and so forth are applicable before thermal reduction and self- growth in light of the practical requirements. By controlling the temperature and pre-treatment, we have successfully synthesized powders, bulk, sheets and chips as shown in Fig.3e-g.

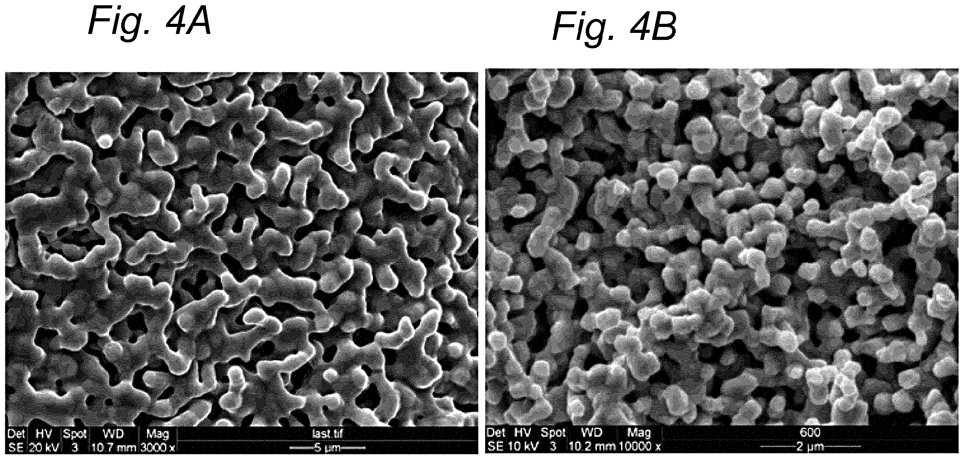

Figs. 4a-d show SEM pictures of a porous metallic structure according to an embodiment of the present invention. Figs. 4a-c show various nanoporous Ni prepared using nickel nitrate hexahydrate as the precursor and under different thermal reduction and annealing conditions as well as preheating conditions before the reduction and annealing process. Natural cooling was used (for both the preheating and thermal reduction)

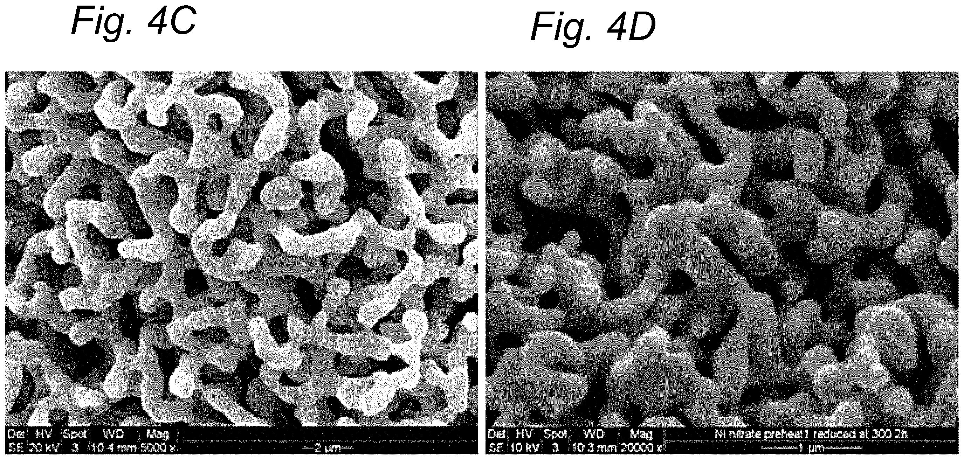

Fig. 4a shows a nanoporous Ni after preheating at ∼100 °C for overnight (12 h-16 h); heating-up rate of 1 °C/min, holding temperature of 600 °C for 2 h in 100 sccm of H₂/Ar (15 vol.% of H₂); Fig. 4b shows a nanoporous Ni after preheating at ∼200 °C for 2 h, heating-up rate of 5 °C/min, holding temperature of 600 °C for 2 h in 100 sccm H₂/Ar (15 vol.% of H₂); Fig. 4c shows a nanoporous Ni after preheating at 600 °C under argon for 2 h, heating-up rate of 1 °C/min, holding temperature of 600 °C for 4 h in 100 sccm H₂/Ar (5 vol.% of H₂). Fig.4d shows a nanoporous Ni after preheating of at ∼100 °C for overnight (12 h-16 h); heating-up rate of 1 °C/min, holding temperature of 300 °C for 2 h in 100 sccm of H₂/Ar (15 vol.% of H₂).

Figs. 4a-d show that the pore size, ligament thickness and grain size can be adjusted by controlling the synthesizing parameters. For example, the size of the ligament increases with a higher temperature or/and a longer exposing duration. Typically, the pore-size distribution of these as-prepared nanoporous Ni is around 100 nm - 5 µm, and ligament thickness is also around 100 nm - 5 µm.

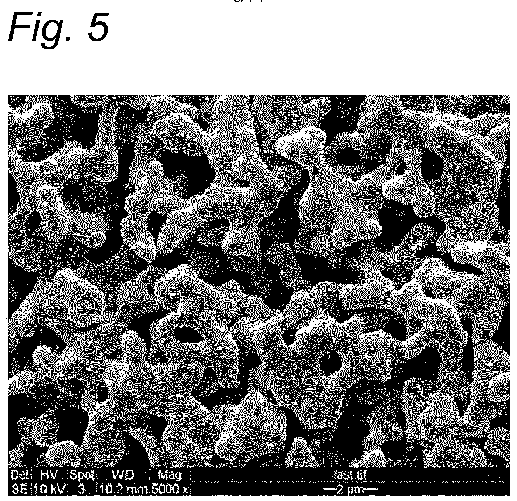

Fig. 5 shows a SEM picture of a porous metallic structure according to an embodiment of the present invention. Fig. 5 shows nanoporous Ni prepared by using nickel nitrate hexahydrate without preheating under the condition of heating-up rate of 1°C/min, annealing temperature of 600 °C for 2h in H₂/Ar (8 vol.% H₂) and natural cooling. Fig. 5 shows the nanoporous Ni prepared by direct reduction and annealing of nickel nitrate hexahydrate precursor. The morphology of the sample without the preheating is different than the sample with the preheating. This indicates that the preheating of precursors is a selectable processing step prior to thermal reduction and annealing, and mainly used for nanostructure control.

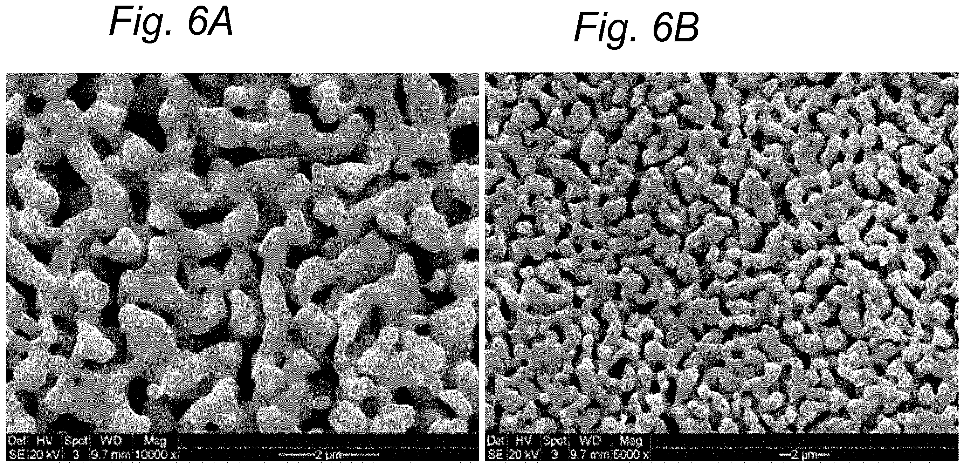

Figs. 6a-b show SEM pictures of a porous metallic structure according to an embodiment of the present invention. Fig. 6a shows nanoporous Ni produced with Ni(OH)₂ as the precursor and Fig. 6b shows nanoporous Ni with NiO as the precursor. The thermal reduction and annealing conditions for both are: heating-up rate of 5°C/min, holding temperature of 600 °C for 2h in H₂/Ar (5 vol.% H₂) and natural cooling. Figs. 6a-b show that the porous structures are very uniform, but a little difference with that prepared by using nickel nitrate hexahydrate as precursors (Fig. 5).

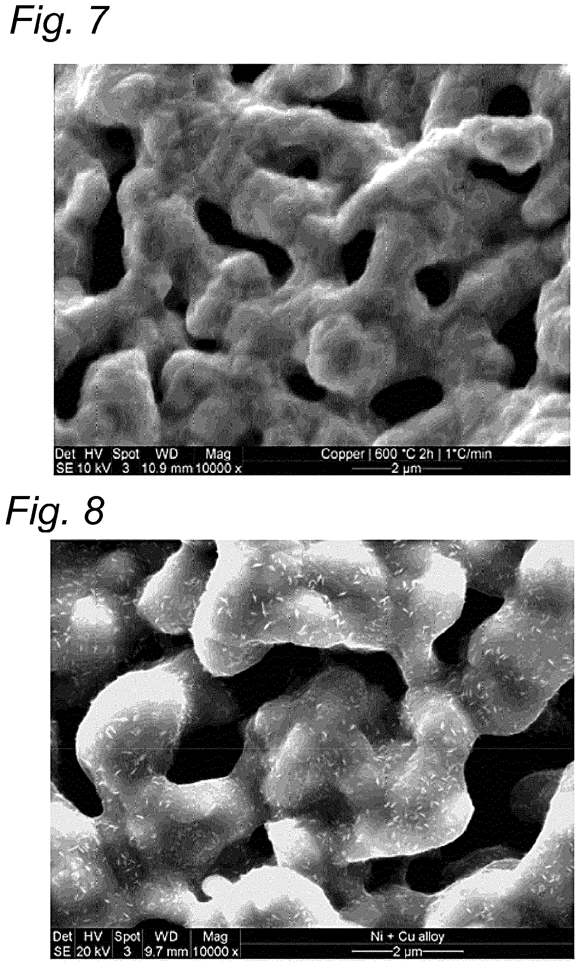

Fig. 7 shows a SEM picture of a porous metallic structure according to an embodiment of the present invention. Fig. 6 shows the nanoporous Cu produced including a pretreatment. Fig. 6 shows nanoporous Cu prepared by thermal reduction and annealing of copper nitrate under the condition of preheating at -100 °C for 12 h; heating-up rate of 1°C/min, holding temperature of 600 °C for 2 h in 100 sccm H₂/Ar (15 vol.% of H₂) and natural cooling. Before preheating, the copper nitrate is dissolved in water (500 g/L).

Fig. 8 shows a SEM picture of a porous metallic structure according to an embodiment of the present invention. Fig. 8 shows nanoporous Cu-Ni alloy prepared by thermal reduction and annealing of the mixture of copper nitrate and nickel nitrate (1:1 in mole) under the condition of preheating at -100 °C for 12 h; heating-up rate of 1 °C/min, holding temperature of 600 °C for 2 h in 100 sccm H₂/Ar (15 vol.% of H₂) and natural cooling. Before preheating, the copper nitrate and nickel nitrate mixture is dissolved in water (500 g/L).

In Figs. 4 - 8, the scale bars of the SEM pictures can be found.

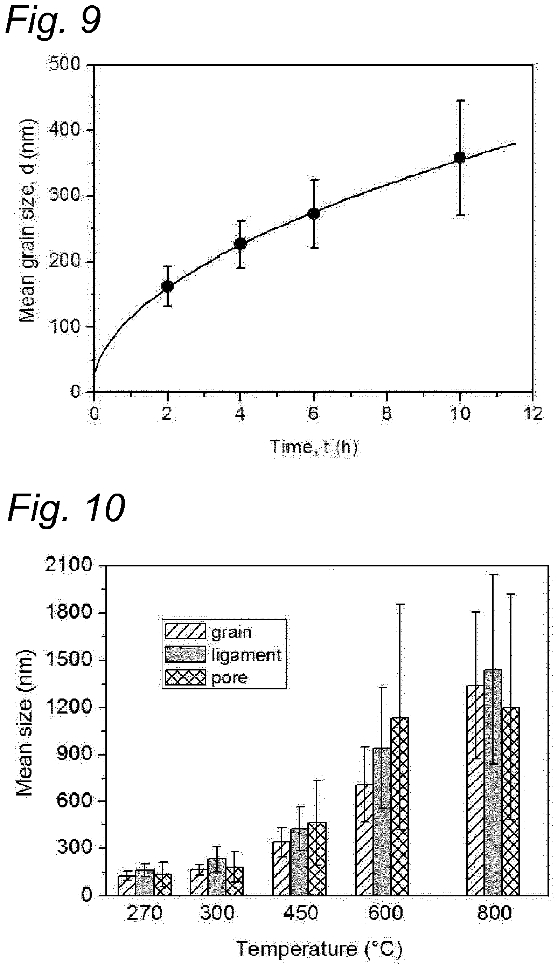

Fig. 9 shows a dependence of mean grain size of a (nano)porous metallic structure on the exposing duration according to an embodiment. The mean grain size or the grain size of the (nano)porous metallic structure increases with increasing the exposing duration. Optionally, the mean grain size increases with increasing the temperature during the exposing.

Fig. 10 shows a dependence of mean size of ligament, grains and pores on the temperature during the exposing. The ligament size or/and the grain size or/and the pore size increases with increasing the temperature during the exposing.

According to another aspect, the invention provides a porous metallic structure obtainable by the abovementioned method.

According to yet another aspect, the invention provides a battery comprises a current collector, wherein the current collector comprises the porous metallic structure.

In another embodiment, the battery can be a lithium-ion battery, lithium-air battery, lithium-sulfur battery, alumina-ion battery, zinc-oxygen battery, Ni-Zn battery or a sodium-ion battery.

Advantageously, based on our results, the nanoporous Ni can be used as an advanced current collector for lithium batteries as it has good conductivity and higher specific surface area to host more active materials. The cycling performances, capacity, and lifespan of the batteries are thus improved due to the nanoporous structures.

In yet another embodiment, the current collector is filled with a chemically active material comprising at least one of silicon, sulfur, germanium, antimony, indium, tin, tin oxides, lithium iron phosphate, Li₄Ti₅O₁₂, MnO₂, Mn₃O₄, MnO, Fe₂O₃, Fe₃O₄, FeF₃, CuO, Cu₂O, TiO₂, V₂O₅, CoO, Co₃O₄, NiCo2O4, RuO2, NiOOH, Ni(OH)₂, Co(OH)₂, MoS₂, SnS₂, VS₂, V₅S₈, SnSe₂, NiS, Ni₂S₃, CoS₂, TiS₂, FeS, oxalates such as NiC₂O₄, MnC₂O₄, CoC₂O₄, FeC₂O₄, CuC₂O₄, and LiFePO₄, LiMn₂O₄,phosphorus.

According to yet another aspect, the invention provides a capacitor plate comprising the porous metallic structure.

The possible applications of this invention are mainly in energy conversion and storage (such as batteries, supercapacitors, oxygen reduction reaction, hydrogen generation, etc.), catalysts (such as carbon dioxide reduction), environmental cleaning (adsorption, ions remove, decomposition of organics, filter, etc.), sensors, conductors, bioengineering materials. Besides applications for catalyst, electrodes, energy storage and conversion, filter or oil retaining bearing, the porous metals can be also used as templates (for porous materials preparation like porous graphene), sensors, conductors, bioengineering materials (artificial implants).

In yet another embodiment, the invention provides a use of the porous metallic structure in at least one of the following devices: as a current collector (e.g. electrodes for batteries), an electro-chemically or chemically driven actuator, a sensor, a battery, a capacitor, a catalyst, a template (e.g. for deposition of graphene), a heat exchanger, a reinforcement skeleton, a bioengineering implant, a drug delivery device, a filter (e.g. for liquid purification). The porous metallic structure is especially suitable for these devices because of the enhanced specific area, surface energy. The porous metallic structure can also be used in automotive, bio-medical, and aerospace industries because of the low density and high stiffness of the metallic structure. For using the porous structure in batteries, the porous structure can largely increase the loading, contact area with active materials, hence raise the volumetric capacity.

In the present invention, the porous metallic structure can be a 3D hierarchically nanoporous metal.

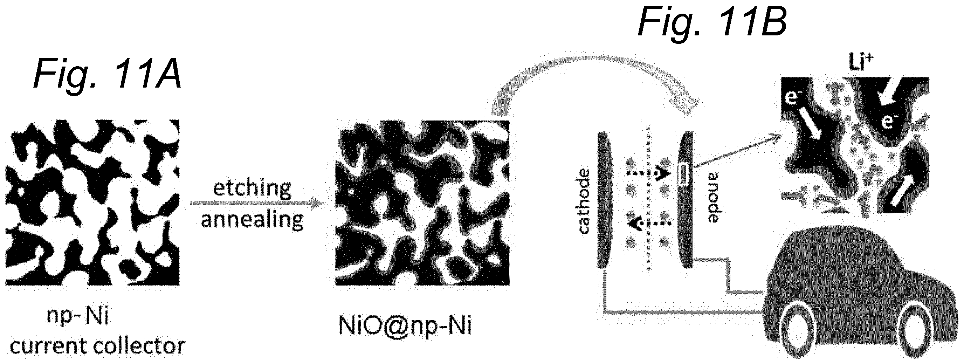

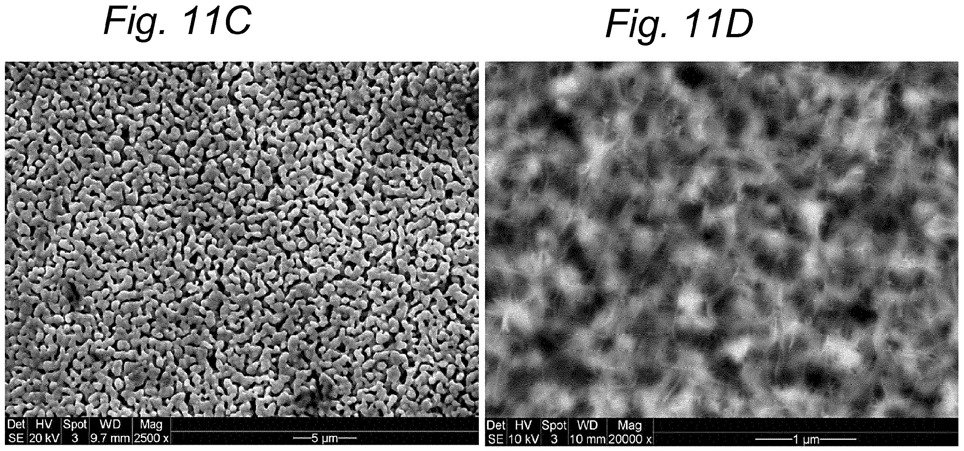

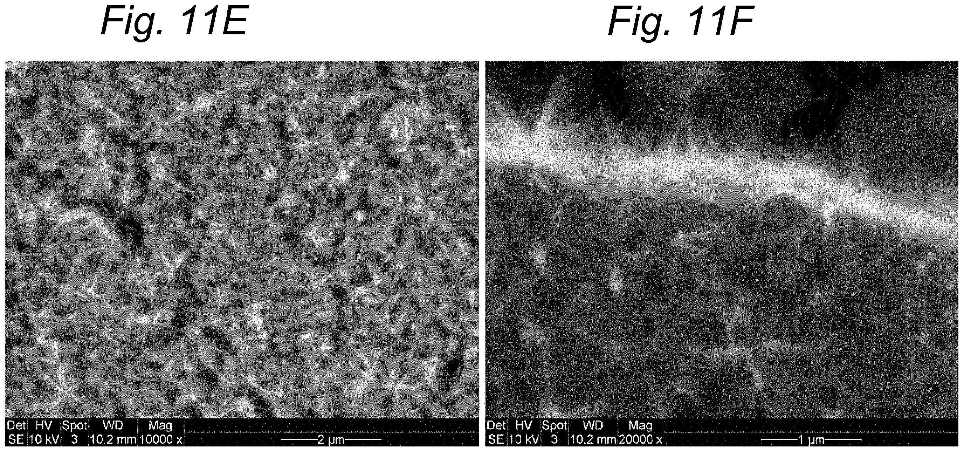

Porous metallic structures have good mechanical property, fast electron transport, rich paths for ions diffusion. These merits has made the porous metallic structure became advantageous electrodes for batteries, supercapacitors, fuel cells, hydrogen reduction, etc. For example, electrochemical active materials were infiltrated inside the porous electrodes and delivered excellent rate and long-life performances. To prove the excellent performances of nanoporous metals foam as 3D binder-free current collector in the application of energy conversion and storage, we investigated the electrochemical performances of electrodes of NiO coating filled inside of porous Ni. Fig. 11 shows the preparation of NiO@np metals for lithium ion batteries. Normally, for thick bulk materials, the uniform infiltration of exotic materials inside the porous is difficult because of the low ions diffusion rate and worse adherent of the coating. For instance the deposition of MnO₂, Sn, SnO₂, Si etc. inside the porous previously were only feasible for thin porous films. To address this problem, we introduced the assistance of in-situ growth of coating for preparing uniform coatings inside the porous structure. We synthesized NiO nanostructure coating inside the porous structure of porous Ni by simply etching with oxalic acid. During etching by oxalic acid, nickel oxalic nanosheets deposited inside the pores and form a porous NiC₂O₄ coating. After annealed the sample in air under 450 °C for 1 h the porous NiO then formed.

Figure 11b shows the SEM images of microstructures of porous Ni prepared at 600 °C by using Ni(OH)₂. The porous structure is uniform and pore size is around 0.1-1 µm. All the chips used for electrodes have the size of 0̸ 13 mm×200 µm as shown in Fig.3g. The electron conductivity measured by four-wire-probe resistance test is ∼2.5-4 S/m. Fig. 11c shows the microstructure of NiC₂O₄ nano-needles@ np-Ni. After annealing the NiC₂O₄ decomposed to NiO nano-needles without obvious structure changes. The NiO coating loading is 0.8 ∼ 10 mg/ cm².

The present invention has been described above with reference to a number of exemplary embodiments as shown in the drawings. Modifications and alternative implementations of some parts or elements are possible, and are included in the scope of protection as defined in the appended claims.

In the foregoing description of the figures, the invention has been described with reference to specific embodiments thereof. It will, however, be evident that various modifications and changes may be made thereto without departing from the scope of the invention as summarized in the attached claims.

In addition, many modifications may be made to adapt a particular situation or material to the teachings of the invention without departing from the essential scope thereof. Therefore, it is intended that the invention not be limited to the particular embodiments disclosed, but that the invention will include all embodiments falling within the scope of the appended claims.

In particular, combinations of specific features of various aspects of the invention may be made. An aspect of the invention may be further advantageously enhanced by adding a feature that was described in relation to another aspect of the invention.

It is to be understood that the invention is limited by the annexed claims and its technical equivalents only. In this document and in its claims, the verb "to comprise" and its conjugations are used in their non-limiting sense to mean that items following the word are included, without excluding items not specifically mentioned. In addition, reference to an element by the indefinite article "a" or "an" does not exclude the possibility that more than one of the element is present, unless the context clearly requires that there be one and only one of the elements. The indefinite article "a" or "an" thus usually means "at least one".

## Claims

1. A method for producing a porous metallic structure comprising a metal element from a metal salt comprising a cation part and an anion part, comprising the steps of:
providing (120) a volume of metal salt;
exposing (140) the volume of metal salt in an atmosphere comprising a reduction gas at a temperature below a melting temperature of the metal element, leading to converting the volume of metal salt into the porous metallic structure by removing the anion part using the reduction gas;
wherein the porous metallic structure has a pore size between 1 nanometer and 50 micrometer, and a ligament size between 1 nanometer and 50 micrometer;
wherein the ligament size is controlled by the temperature during the exposing.

2. The method according to claim 1, wherein the converting the volume of metal salt into the porous metallic structure comprises at least one of the following:
thermal decomposition of the metal salt;
thermal reducing the metal salt, and
annealing the metal salt at the temperature below the melting temperature of the metal element.

3. The method according to any one of the claims 1 - 2, wherein the temperature is between 100 °C and 3000 °C, more particularly, between 200 °C and 1000 °C, or/and the exposing comprises an exposing duration at the temperature between 1 second and 1 week, more particularly, between 10 seconds and 24 hours.

4. The method according to any one of the claims 1 - 3, wherein the exposing comprises:
a temperature increase rate between 0.1 °C/min and 500 °C/min, more particularly, between 1 °C/min and 20 °C/min, or/and
a temperature decrease rate between 0.1 °C/min and 1000 °C/min, or/and
a cooling time between 1 second and 5 weeks, or/and
a pressure in the atmosphere between 10⁻⁶ mbar and 2 bar, or/and
a mechanical pressing of the metal salt with a pressure of the mechanical pressing between 0 and 1000 MPa, more particularly, between 0 and 200 MPa.

5. The method according to any one of the claims 1 - 4, wherein the reduction gas comprises hydrogen, more particularly H2/Ar (0.001-100 vol.% H2) or H2/N2 (0.001-100 vol.% H2).

6. The method according to any one of the claims 1 - 5, further comprising a pretreatment of the metal salt before the exposing, wherein the pretreatment comprises preheating or/and mechanical pressing, such as pressing with a pressure between 0 and 1000 MPa, or/and adding a buffer additive, such as NaCl, SiO₂, or polyethylene glycol to the metal salt before the preheating.

7. The method according to claim 6, wherein the preheating is at a temperature between 0 °C and 800 °C, more particularly, between 100 °C and 200 °C, the preheating comprises a temperature increase rate or/and a temperature decrease rate between 0.1 °C/min and 100 °C/min, or/and a duration between 1 second and 5 weeks, or/and the pretreatment is in a pretreatment atmosphere comprising at least one of air, water vapor, N2, Ar, H2/Ar (0-100 vol.% H2), H2/N2 (0-100 vol.% H2) or/and a pressure between 10⁻⁶ mbar and 10000 bar.

8. The method according to any one of the claims 1 - 7, wherein the porous metallic structure comprises a surface area is between 0.1 m²/g and 1000 m²/g, more particularly, between 0.1 m²/g and 200 m²/g.

9. The method according to any one of the claims 1 - 8, wherein the ligament size increases with increasing the temperature during the exposing, or/and
the ligament size is controlled by an exposing duration or/and a concentration of the reduction gas or/and a flow rate of the reduction gas; or/and
the pore size is controlled by the temperature or/and the exposing duration or/and the concentration of the reduction gas or/and the flow rate of the reduction gas; or/and
a grain size of the porous metallic structure is controlled by the temperature or/and the exposing duration or/and the concentration of the reduction gas or/and the flow rate of the reduction gas.

10. The method according to any one of the claims 1 - 9, further comprising synthesizing a coating covering the porous metallic structure, preferably the coating comprises oxide, preferably the coating is synthesized by chemical synthesis or/and electrodeposition or/and chemical vapor deposition or/and diffusion or/and ultra-sonication.

11. The method according to any one of the claims 1 - 10, wherein the cation part comprises at least one of: Li, Al, Mg, Zr, Nb, Mo, Tc, Rh, Pt, Ir, Os, Re, La, Hf, W, Ni, Cu, Fe, Co, Pt, Au, Ag, Ti, Zn, Ta, Mn, Cr, Sn, V, Cd, Ru, Pd, preferably, the metal salt comprises at least one of: metal chlorides, metal oxalates, metal acetates, metal nitrates, metal nitrites, metal sulfates, metal sulfites, metal carbonates, organometallic salts, metal phosphates, metal chloride hydrates, metal oxalate hydrates, metal acetate hydrates, metal nitrate hydrates, metal nitrite hydrates, metal sulfate hydrates, metal sulfite hydrates, metal carbonate hydrates, organometallic salt hydrates, metal phosphate hydrates, metal hydroxides, a liquid solution with 0.1 - 100 wt. % of metal chlorides, metal oxalates, metal acetates, metal nitrates, metal nitrites, metal sulfates, metal sulfites, metal carbonates, organometallic salts, metal phosphates, metal chloride hydrates, metal oxalate hydrates, metal acetate hydrates, metal nitrate hydrates, metal nitrite hydrates, metal sulfate hydrates, metal sulfite hydrates, metal carbonate hydrates, organometallic salt hydrates, metal phosphate hydrates), or metal hydroxides.

12. A porous metallic structure obtainable by the method according to any one of the claims 1 - 11.

13. An electrode comprising a current collector, wherein the current collector comprises a porous metallic structure according to claim 12.

14. A capacitor plate comprising a porous metallic structure according to claim 12.

15. Use of the porous metallic structure according to claim 12 in at least one of the following devices:
a current collector;
an electro-chemically or chemically driven actuator;
a sensor;
a battery;
a capacitor;
a catalyst;;
a template;
a heat exchanger;
a reinforcement skeleton;
a bioengineering implant;
a drug delivery device;
a filter.
